# EUROPÄISCHE PATENTSCHRIFT

(11) **EP 2 537 219 B1**
(45) Veröffentlichungstag und Bekanntmachung des Hinweises auf die Patenterteilung: **06.07.2016**
(21) Anmeldenummer: 11701817.6
(22) Anmeldetag: 27.01.2011
(51) Int. Cl.: H02H 9/04

(54) **ÜBERSPANNUNGSBEGRENZUNGSEINRICHTUNG FÜR GLEICHSPANNUNGSNETZE**
OVERVOLTAGE LIMITING DEVICE FOR DC NETWORKS
DISPOSITIF DE LIMITATION DE SURTENSION POUR RÉSEAUX À COURANT CONTINU

(30) Priorität: 15.02.2010 DE 102010001924
(43) Veröffentlichungstag der Anmeldung: 26.12.2012
(73) Patentinhaber: Siemens Aktiengesellschaft, 80333 München (DE)
(72) Erfinder: VOGEL, Reinhard, 91074 Herzogenaurach (DE); MÖRSCH, Michael, 91054 Erlangen (DE)
(86) Internationale Anmeldenummer: PCT/EP2011/051128
(87) Internationale Veröffentlichungsnummer: WO 2011/098359

(56) Entgegenhaltungen:
- EP-A1- 0 239 863
- WO-A1-2006/003191
- FR-A1- 2 801 441
- US-A- 5 038 245
- US-B1- 6 226 166

## Beschreibung

Die Erfindung betrifft eine Überspannungsbegrenzungseinrichtung für Gleichspannungsnetze gemäß Oberbegriff des Patentanspruchs 1.

Zur Energiespeicherung in Gleichspannungs-(DC)-Netzen werden bevorzugt Batterien bzw. Akkumulatoren (zur Vereinfachung im Folgenden als "Batterien" bezeichnet) eingesetzt. Zum Schutz derartiger Batterien und zum Schutz einzelner Verbraucher werden Schutzeinrichtungen eingesetzt, die eine selektive Klärung eines Kurzschlusses ermöglichen. Um dies zu erreichen, werden zum einen der Batterie selbst Schutzorgane zugeordnet, die im Kurzschlussfall verzögert ansprechen, wie z.B. verzögerte elektromechanische Leistungsschalter mit Überstromerkennung und einer Verzögerungszeit von z.B. > 100 ms. Den einzelnen Verbrauchern werden demgegenüber Schutzorgane zugeordnet, die unverzögert arbeiten oder zumindest eine deutlich kleinere Verzögerung aufweisen, z.B. unverzögerte elektromechanische Leistungsschalter mit einer Gesamt-Auslösezeit von ca. 30 ms oder Schmelzsicherungen mit einer vom Kurzschluss-Strom abhängigen Auslösezeit von < 1...40 ms, so dass die Selektivität der Kurzschlussklärung erreicht werden kann.

In Hochenergie-Gleichspannungsnetzen, wie sie zum Beispiel in U-Booten zum Einsatz kommen, bei denen die Energiespeicherung in Hochleistungsbatterien erfolgt, ist die im Kurzschlussfall wirksame Zeitkonstante, mit der der Strom ansteigt, jedoch so klein, z.B. < 1...3 ms, so dass auch bei Verwendung von unverzögerten Schutzorganen der Kurzschluss-Strom annähernd oder vollständig den Wert des stationären Kurzschluss-Stroms erreicht. Zudem ist wegen des sehr geringen ohmschen Innenwiderstands der Batterien, der Leistungskabel, Verteilerschienen usw. dieser von der Batterie getriebene Kurzschluss-Strom sehr groß und kann mehrere 10 kA betragen.

In einem Kurzschlussfall in einem Verbraucherabgang schaltet das unverzögerte Verbraucher-Schutzorgan dann bei diesem großen Strom ab und verhindert weitere Schäden durch Überströme im betroffenen Verbraucherabgang.

Der vom Energiespeicher bzw. der Spannungsquelle gespeiste Kurzschluss-Strom fließt jedoch wegen der in den parasitären Induktivitäten der Batterie, der Kabelstrecken usw. gespeicherten Energie so lange weiter, bis diese Energie abgebaut oder z.B. in kapazitive Energiespeicher umgeladen worden ist. Der Abbau der in den parasitären Induktivitäten gespeicherten Energie erfolgt dabei nur zu einem kleinen Teil im Lichtbogen der sich öffnenden Kontakte oder Schmelzleiter der Verbraucher-Schutzorgane. Die nicht im Lichtbogen abgebaute Energie aus dem Kurzschluss-Strom fließt nun über das Netz an die anderen dort angeschlossenen Verbraucher weiter und kann dort zu erheblichen Überspannungen führen, so dass insbesondere spannungssensitive Verbraucher geschädigt werden können. Solche spannungssensitive Verbraucher sind insbesondere leistungselektronische Stromrichter und Steller mit Elektrolytkondensatoren auf der DC-Seite, die in der Regel aus Aufwands-, Platz- und Verfügbarkeitsgründen nicht für erhebliche Überspannungen dimensioniert werden können. Oft liegt bei solchen Stromrichtern der maximal zulässige Spannungswert mit Überspannung nur ca. 33 % über demjenigen im fehlerfreien Bordnetzzustand. Es bestehen somit hohe Anforderungen an eine wirksame, schnelle und eng tolerierte Begrenzung der auftretenden Überspannungen.

Aus der WO 2006/003191 A1 ist es bereits bekannt, in DC-Bordnetzen durch Energierückspeisungen von Verbrauchern, z.B. durch Energierückspeisung von DC-Motoren oder -Generatoren bei zu geringer Bordnetzbelastung, verursachte Überspannungen dadurch zu begrenzen, dass eine Spannungserkennungsschaltung bei Auftreten einer zu hohen Netzspannung einen IGBT ansteuert, der wiederum über einen ohmschen Widerstand dem Netz Energie entzieht.

Nach dem gleichen Funktionsprinzip arbeiten auch die sog. "Brems-Chopper", wie sie heute in praktisch allen Pulsumrichtern mit netzseitiger Diodeneinspeisung üblich sind, weil die Bremsenergie aus der elektrischen Maschine nicht ins Netz zurückgespeist werden kann, sondern im DC-Zwischenkreis im dort angeordneten, im Bedarfsfall zugeschalteten ohmschen Widerstand in Wärme umgewandelt wird.

Eine solche Anordnung ist besonders für solche Überspannungsfälle geeignet, die aus vergleichsweise lang andauernden, aber vom Strombetrag her auf einige hundert Ampere begrenzte Energierückspeisung resultieren, wie sie bei der Energierückspeisung von elektrischen Maschinen auftreten. Zum Energieabbau von kurz andauernden Überspannungsimpulsen im Millisekundenbereich, die aus sehr hohen treibenden Strömen im Bereich von einigen 10 kA resultieren, müssten jedoch wegen der begrenzten Stromtragfähigkeit von abschaltbaren Leistungs-Halbleiterschaltern IGBTs oder auch IGCT's eine Vielzahl solcher Schaltungen parallel geschaltet werden, was einen hohen technischen Aufwand erfordert.

Eine andere, generell gebräuchliche Lösungsmöglichkeit zur Begrenzung von Überspannungen besteht darin, zum Überspannungsschutz spannungsabhängige Widerstände, sog. "Varistoren" zu verwenden. Im Zusammenhang mit Stromrichterschaltungen werden sie bevorzugt zur Begrenzung von Blitz- und Schaltspannungen eingesetzt. Eine Überspannungsbegrenzung auf den ca. 1,33-fachen Wert der Dauer-Nennbetriebsspannung ist damit aber nicht erreichbar, weil die Begrenzungskennlinie solcher Bauelemente nicht steil genug ist.

Für Spannungsbegrenzungen, bei denen die maximal zulässige Spannung nur wenig über dem Wert der Nenn-Dauer-Betriebsspannung liegt, würde sich der Einsatz von Zener-Dioden ("Z-Dioden") empfehlen, die eine sehr steile Begrenzungskennlinie haben. Solche Bauelemente sind jedoch nur im Bereich kleiner Leistungen (bis zu einigen Watt) verfügbar und können somit nicht im Bereich von Hochleistungs-DC-Netzen zur Begrenzung energiestarker Überspannungsimpulse eingesetzt werden.

Aus der FR 2 801 441 A1 ist eine Überspannungsbegrenzungseinrichtung bekannt, wobei die Zenerdiode in Reihe zu einer Parallelschaltung aus einem Schalter und einem elektronischen Bauteil mit einer spannungsbegrenzenden Charakteristik geschaltet ist.

Auch aus der US 5 038 245 A und der US 6 226 166 B1 ist eine solche Überspannungsbegrenzungseinrichtung bekannt.

Zusammenfassend kann festgestellt werden, dass bisher keine befriedigende und technisch einfache Lösung dafür bekannt ist, Überspannungen in DC-Hochleistungsnetzen, die aus der Abschaltung von Kurzschluss-Strömen im kA-Bereich resultieren, auf ein Spannungsniveau zu begrenzen, das nur wenig über der Nenn-Betriebsspannung liegt.

Es ist deshalb Aufgabe vorliegender Erfindung, eine Überspannungsbegrenzungseinrichtung für Gleichspannungsnetze anzugeben, die es ermöglicht, vergleichsweise hohe Energiemengen bei hohen treibenden Strömen und vergleichsweise geringen Differenzen zwischen zulässiger maximaler Spannung und normaler Betriebsspannung des Netzes abzubauen, um so den Schutz von Verbrauchern, insbesondere von spannungssensitiven Verbrauchern wie z.B. von leistungselektronischen Stromrichterschaltungen, zu gewährleisten.

Die Lösung dieser Aufgabe gelingt durch eine Überspannungsbegrenzungseinrichtung gemäß Patentanspruch 1. Vorteilhafte Ausgestaltungen sind jeweils Gegenstand der Unteransprüche.

Eine erfindungsgemäße Überspannungsbegrenzungseinrichtung umfasst einen Varistor, der in Reihe zu einer Parallelschaltung aus einem, vorzugsweise elektronischen, Schalter und einem elektronischen Bauteil mit einer spannungsbegrenzenden Charakteristik, vorzugsweise einer Z-Dioden-Charakteristik, oder mehreren in Reihe geschalteten elektronischen Bauteilen mit jeweils einer spannungsbegrenzenden Charakteristik, vorzugsweise einer Z-Dioden-Charakteristik, geschaltet ist, **wobei die Überspannungsbegrenzungseinrichtung eine Steuereinrichtung aufweist, die derart eingereichtet ist, dass sie den Schalter schließt, wenn der Strom durch das (die) elektronische(n) Bauteil(e) mit der spannungsbegrenzenden Charakteristik einen vorgegebenen Wert überschreitet.** Unter einem elektronischen Bauteil mit einer Z-Dioden-Charakteristik wird dabei ein Bauteil verstanden, das hinsichtlich seiner Strom-Spannungskennlinie eine gleiche Charakteristik wie eine Z-Diode hat.

Durch die Reihenschaltung des Varistors mit dem (den) elektronischen Bauteil(en) mit der spannungsbegrenzenden Charakteristik ist es möglich, die Spannungsbegrenzungskennlinie der erfindungsgemäßen Lösung gegenüber alleiniger Verwendung des Varistors im Bereich niedriger Ableitströme zu versteilern. Mit Hilfe des Schalters, der in geschlossenem Zustand, d.h. bei Stromdurchlass, das (die) elektronische(n) Bauteil(e) mit der spannungsbegrenzenden Charakteristik überbrückt, ist es möglich, die Versteilerung der Spannungsbegrenzungskennlinie der erfindungsgemäßen Lösung gegenüber alleiniger Verwendung des Varistors gezielt ab- oder zuzuschalten.

Das Schließen des Schalters **erfolgt** durch eine Steuereinrichtung, die den Schalter schließt, d.h. auf Stromdurchlass schaltet, wenn die zu begrenzende Spannung und/oder der Strom durch die Reihenschaltung aus Varistor und dem (den) elektronischen Bauteil(en) mit der spannungsbegrenzenden Charakteristik einen vorgegebenen Wert überschreitet, da der Strom durch die beiden in Reihe geschalteten Bauelemente durch die Summe der spannungsabhängigen Widerstände dieser beiden Bauelemente und durch die an dieser Reihenschaltung anliegende Spannung bestimmt wird.

Das Öffnen des Schalters kann beispielsweise dadurch erfolgen, dass der Schalter derart ausgebildet ist, dass er selbsttätig öffnet, oder dass die Steuereinrichtung oder - beispielsweise im Falle eines Thyristorschalters - eine Löscheinrichtung für den Schalterstrom derart eingerichtet ist, dass sie den Schalter öffnet, wenn die zu begrenzende Spannung einen vorgegebenen Wert unterschreitet.

Der Spannungs- und/oder Stromwert, bei dem der Schalter öffnet, wird bevorzugt derart gewählt, dass ein erneutes Ansprechen der Überspannungsbegrenzungseinrichtung nach Umschalten auf die dann wieder vorliegende Reihenschaltung aus Varistor und dem (den) elektronischen Bauteil(en) mit der spannungsbegrenzenden Charakteristik ausgeschlossen werden kann.

Durch ein Schließen des Schalters ergibt sich eine Änderung der spannungsbegrenzenden Eigenschaften der Schaltung in der Art, dass eine resultierende Ansprech-Überspannung der Überspannungsbegrenzungseinrichtung um die Z-Diodenspannung kleiner wird und somit der Spannungsbegrenzungswert des Varistors bzw. der Varistoren erreicht werden kann.

Es ist somit eine Versteilerung der Spannungsbegrenzungskennlinie gegenüber alleiniger Verwendung eines Varistors im Bereich niedriger Ableitströme möglich, so dass durch die erfindungsgemäße Schaltung eine Überspannungsbegrenzung auf einen Wert erfolgen kann, der nur wenig über der Dauer-Nennbetriebsspannung liegt, z.B. auf dem ca. 1,33-fachen Wert der Dauer-Nennbetriebsspannung.

Durch den stark nichtlinearen, spannungsabhängigen Widerstandsverlauf des Varistors kann der Ableitstrom durch den Varistor und den elektronischen Schalter sehr schnell auf einen großen Stromwert ansteigen und somit ein energiereicher Überspannungsimpuls abgebaut werden. Nach dem Abbau des Überspannungsimpulses und einem Abklingen des Ableitstroms durch den Varistor kann der Strom von dem Schalter wieder auf das (die) elektronische(n) Bauteil(e) mit der spannungsbegrenzenden Charakteristik geleitet werden, wodurch sich wieder die durch die Reihenschaltung des Varistors mit dem (den) elektronischen Bauteil(en) mit der spannungsbegrenzenden Charakteristik definierte Ansprech-Überspannung und somit der Ausgangszustand der Überspannungsbegrenzungseinrichtung selbsttätig einstellt.

Die Erfindung kombiniert somit die Eigenschaften von Varistoren zur Begrenzung von Spannungsimpulsen mit hohem Energieinhalt im kJ-Bereich, der Eigenschaften elektronischer Bauteile mit einer spannungsbegrenzenden Charakteristik, wie z.B. von Z-Dioden zur steilen Spannungsbegrenzung im Bereich kleiner Ströme und Leistungen im Bereich einiger Watt, und das Schalt- und Stromführungsvermögen von Schaltern, insbesondere von elektronischen Schaltern, wie z.B. Thyristoren, im Bereich von einigen 10 kA bis 100 kA.

Bevorzugt ist durch die Reihenschaltung des Varistors mit dem (den) elektronischen Bauteil(en) mit der spannungsbegrenzenden Charakteristik eine Ansprech-Überspannung für eine Überspannungsbegrenzung definiert, die kleiner oder gleich einer maximal erlaubten Überspannung des Gleichspannungsnetzes ist.

Der Varistor selbst kann dabei eine Dauernennbetriebsspannung aufweisen, die kleiner als die Nennspannung des Gleichspannungsnetzes ist.

Bevorzugt weist der Varistor eine Begrenzungsspannung auf, die beim zu erwartenden Ableitstrom kleiner oder gleich einer maximal erlaubten Überspannung des Gleichspannungsnetzes ist.

Gemäß einer besonders vorteilhaften Ausgestaltung der Erfindung ist die Anzahl der in Reihe geschalteten elektronischen Bauteile mit der spannungsbegrenzenden Charakteristik derart gewählt, dass die Summe aus den Dauernennbetriebsspannungen der elektronischen Bauteile mit der spannungsbegrenzenden Charakteristik und der Dauernennbetriebsspannung des Varistors gleich groß wie die Nennspannung des Gleichspannungsnetzes ist.

Die Ansteuerung des Schalters kann dabei besonders einfach und schnell durch einen in Reihe zu dem (den) elektronischen Bauteil(en) mit der spannungsbegrenzenden Charakteristik geschalteten elektrischen Widerstand erfolgen, der derart dimensioniert ist, dass bei Erreichen einer Ansprech-Überspannung der Überspannungsbegrenzungseinrichtung ein so großer Strom durch den Widerstand fließt, dass an dem Widerstand eine Spannung abfällt, die ausreicht, um den Schalter in den durchgeschalteten Zustand zu schalten, insbesondere einen Thyristor zu zünden.

Besonders vorteilhaft ist es, wenn der Schalter als ein Thyristor ausgebildet ist. Der im Überspannungsfall durch das (die) elektronische(n) Bauteil(e) mit der spannungsbegrenzenden Charakteristik fließende Strom kann dann auch gleich zum Zünden des Thyristors genutzt werden. Dies kann beispielsweise - wie vorstehend beschreiben - mit Hilfe des Spannungsabfalls an einem in Reihe zu dem (den) elektronischen Bauteil(en) mit der spannungsbegrenzenden Charakteristik geschalteten elektrischen Widerstand erfolgen.

Da der Thyristor nach dem Zünden und somit Schalten auf Stromdurchfluss das (die) elektronische(n) Bauteil(e) mit der spannungsbegrenzenden Charakteristik überbrückt, kann nach dem Zünden des Thyristors kein Zündstrom mehr fließen, so dass nach einem Abbau eines Überspannungsimpulses und einem Abklingen des Ableitstroms durch den Varistor unter den Haltestrom des Thyristors dieser selbsttätig wieder in den Blockierzustand zurückkehren kann, wobei das (die) dem Thyristor parallel geschaltete(n) Bauteil(e) mit der spannungsbegrenzenden Charakteristik die wiederkehrende Blockierspannung auf den Wert der Begrenzungsspannung begrenzen.

Im Fall eines Thyristorschalters kann zur Löschung oder Löschunterstützung des Thyristorschalters auch eine geeignete Löscheinrichtung vorhanden sein.

Statt als Thyristorschalter kann der Schalter alternativ auch als ein abschaltbares leistungselektronisches Bauelement ausgebildet sein.

Gemäß einer konstruktiv einfachen Ausgestaltung ist (sind) das (die) elektronische(n) Bauteil(e) mit der spannungsbegrenzenden Charakteristik jeweils als eine Z-Diode oder ein Varistor ausgebildet.

Statt des einen Varistors kann die Überspannungsbegrenzungseinrichtung auch mehrere zueinander parallel geschaltet Varistoren aufweisen. Bevorzugt ist die Anzahl der Varistoren an ein gewünschtes Energie-Ableitevermögen angepasst.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Darin zeigen:
- FIG 1: ein Gleichspannungsnetz mit einer erfindungsgemäßen Überspannungsbegrenzungseinrichtung,
- FIG 2: eine Strom-Spannungs-Kennlinie der Überspannungsbegrenzungseinrichtung von FIG 1 und
- FIG 3: eine beispielhafte Erweiterung der in FIG 1 dargestellten Überspannungsbegrenzungseinrichtung.

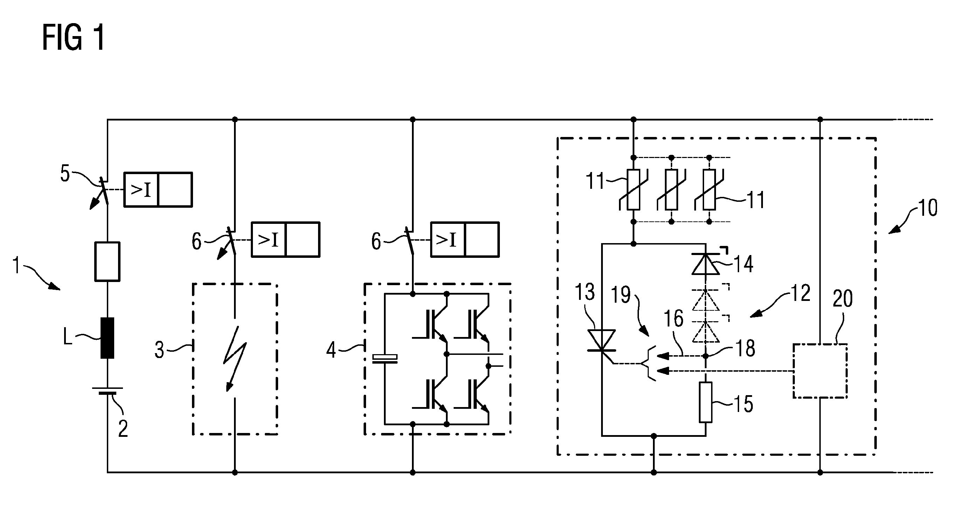

Die FIG 1 zeigt ein Gleichspannungsnetz 1, beispielsweise ein Hochenergie-Gleichspannungsnetz eines U-Bootes, mit einer Batterie 2, und zwei parallel zu der Batterie geschalteten Verbrauchern 3, 4. Bei dem Verbraucher 4 handelt es sich um einen spannungssensitiven Verbraucher wie z.B. einen leistungselektronische Stromrichter und Steller mit Elektrolytkondensatoren auf der DC-Seite. Zum Schutz der Batterie 2 sowie der einzelnen Verbraucher 3, 4 weist das Gleichspannungsnetz 1 Schutzeinrichtungen 5, 6 auf, die eine selektive Klärung eines Kurzschlusses ermöglichen. So ist beispielsweise in Reihe zu der Batterie 2 ein Schutzorgan 5 geschaltet, das im Kurzschlussfall verzögert anspricht. Beispielsweise handelt es sich bei dem Schutzorgan 5 um einen verzögerten elektromechanischen Leistungsschalter mit einer Überstromerkennung und eine Verzögerungszeit von z.B. > 100ms. Den einzelnen Verbrauchern 3, 4 sind demgegenüber Schutzorgane 6 zugeordnet, die unverzögert arbeiten oder zumindest eine deutlich kleinere Verzögerung wie die Schutzorgane 5 aufweisen. Beispielsweise handelt es sich bei den Schutzorganen 6 um unverzögerte elektromechanische Leistungsschalter mit einer Gesamtauslösezeit von ca. 30ms (wie dargestellt) oder um Schmelzsicherungen mit einer vom Kurzschluss-Strom abhängigen Auslösezeit von < 1 bis 10 ms, so dass eine Selektivität der Kurzschlussklärung erreicht werden kann.

Die im Kurzschlussfall wirksame Zeitkonstante, mit der der Strom ansteigt, ist so klein, z.B. < 1...3 ms, so dass auch bei Verwendung von unverzögerten Schutzorganen der Kurzschluss-Strom annähernd oder vollständig den Wert des stationären Kurzschluss-Stroms erreicht. Zudem ist wegen des sehr geringen ohmschen Innenwiderstands der Batterien, der Leistungskabel, Verteilerschienen usw. dieser von der Batterie getriebene Kurzschluss-Strom sehr groß und kann mehrere 10 kA betragen. In einem Kurzschlussfall in einem Verbraucherabgang, hier beispielsweise bei einem Kurschluss im Verbraucher 3, schaltet das zugeordnete unverzögerte Schutzorgan 6 dann bei diesem großen Strom ab und verhindert weitere Schäden durch Überströme im betroffenen Verbraucherabgang.

Der von der Batterie 2 gespeiste Kurzschluss-Strom fließt jedoch wegen der in den parasitären Induktivitäten der Batterie, der Kabelstrecken usw. (hier vereinfacht durch eine Induktivität L symbolisiert) gespeicherten Energie so lange weiter, bis diese Energie abgebaut oder z.B. in kapazitive Energiespeicher umgeladen worden ist. Der Abbau der in den parasitären Induktivitäten gespeicherten Energie erfolgt dabei nur zu einem kleinen Teil im Lichtbogen der sich öffnenden Kontakte oder Schmelzleiter des Verbraucher-Schutzorganes 5. Die nicht im Lichtbogen abgebaute Energie aus dem Kurzschluss-Strom fließt nun über das Netz 1 an die anderen dort angeschlossenen Verbraucher weiter und kann dort zu erheblichen Überspannungen führen, so dass insbesondere der spannungssensitive Verbraucher 4, der in der Regel aus Aufwands-, Platz- und Verfügbarkeitsgründen nicht für erhebliche Überspannungen dimensioniert ist, geschädigt werden kann.

Parallel zu der Batterie 2 und den Verbrauchern 3, 4 ist deshalb eine Überspannungsbegrenzungseinrichtung 10 geschaltet. Die Überspannungsbegrenzungseinrichtung 10 umfasst mehrere parallel zueinander geschaltete Varistoren 11, die in Reihe zu einer Parallelschaltung 12 aus einem elektronischen Schalter 13 und einer oder mehreren mit einem Widerstand 15 in Reihe geschalteten Z-Dioden 14 geschaltet sind. Statt Z-Dioden können auch Varistoren zum Einsatz kommen.

Der elektronische Schalter 13 ist als ein Thyristor ausgebildet, dessen Gate über eine Leitung 16 mit einer Leitungsverbindung 18 zwischen der Reihenschaltung der Z-Dioden 14 und dem Widerstand 15 verbunden ist.

Durch die Reihenschaltung der Varistoren 11 und der Z-Dioden 14 ist eine Ansprech-Überspannung für eine Überspannungsbegrenzung definiert, die kleiner oder gleich einer maximal erlaubten Überspannung Uₘₐₓ des Gleichspannungsnetzes 1 ist. Die Varistoren 11 weisen dabei eine Dauernennbetriebsspannung U_{NV} auf, die kleiner als eine Dauer-Nennbetriebsspannung U_{N} (z.B. U_{N} = 750V) des Gleichspannungsnetzes 1 ist. Weiterhin weisen die Varistoren 11 eine Begrenzungsspannung U_{B} auf, die bei einem zu erwartendem Ableitstrom kleiner oder gleich der maximal erlaubten Überspannung Uₘₐₓ des Gleichspannungsnetzes 1 ist. Die maximal erlaubten Überspannung Uₘₐₓ des Netzes 1 liegt dabei nur wenig über der Dauer-Nennbetriebsspannung U_{N} des Netzes 1, z.B. nur um 30% höher.

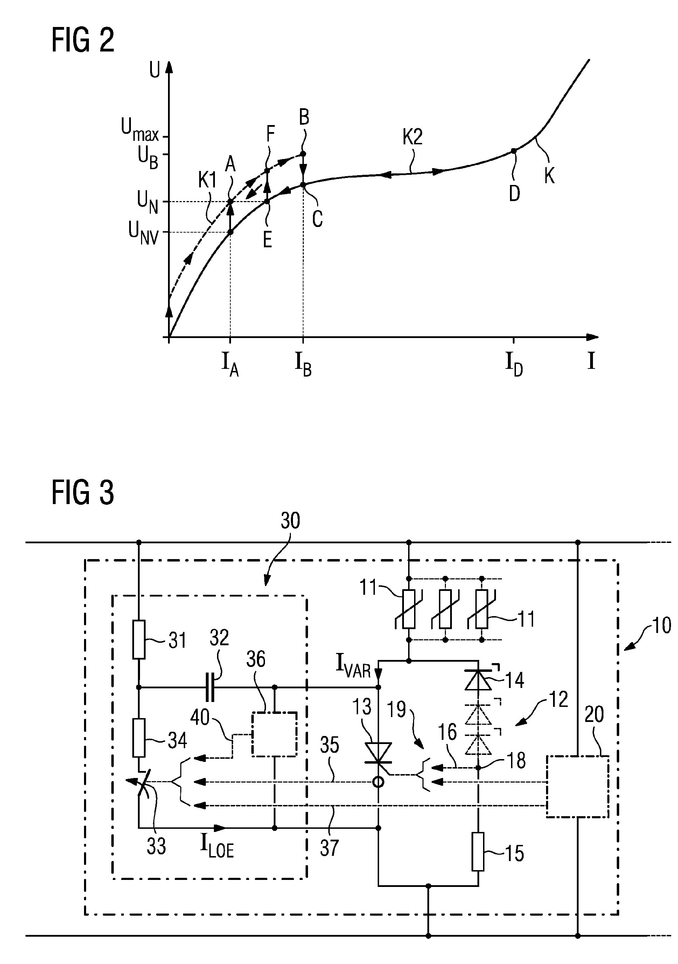

Die Funktionsweise der Überspannungsbegrenzungseinrichtung 10 wird nun anhand von FIG 2 erläutert, die eine Strom-Spannungs-Kennlinie K der Überspannungsbegrenzungseinrichtung 10 zeigt. Dabei ist der Strom I logarithmisch dargestellt. Die Kennlinie K besteht aus einem ersten Abschnitt K1, der durch die Summe der Kennlinien der Varistoren 11 und der Z-Dioden 14 gebildet ist. Daran schließt sich ein zweiter Abschnitt K2 an, der allein durch die Kennlinie der Varistoren 11 gebildet ist.

Wenn die Nennspannung U_{N} an der Überspannungsbegrenzungseinrichtung 10 anliegt, stellt sich ein Arbeitspunkt A mit einem Strom I_{A} von beispielsweise 1mA auf der Kennlinie K1 ein. Der Strom I_{A} fließt dabei durch die Varistoren 11 und die Z-Dioden 14 sowie den Widerstand 15.

Bei einem Anstieg der an der Überspannungsbegrenzungseinrichtung 10 anliegenden Spannung U bewegt sich der Arbeitspunkt entlang der Kennlinie K1 in Richtung zur höheren Spannungen und Ableitströmen, bis in einem Punkt B eine durch die Reihenschaltung der Varistoren 11 und der Z-Dioden 14 definierte Ansprech-Überspannung erreicht ist. Es fließt dann ein so großer Strom I_{B} (z.B. I_{B} = 0,5 A) durch den Widerstand 15, dass die an dem Widerstand 15 und somit an dem Gate des Thyristors 13 anliegende Spannung den Thyristor 13 zündet und dieser auf Stromdurchlass schaltet. Der Thyristor 13 übernimmt dann den durch die Varistoren 11 fließenden Strom. Der Widerstand 15 und die Leitung 16 dienen dabei als eine Steuereinrichtung 19 für ein Schalten des Thyristors 13 auf Stromdurchlass. Alternativ oder zusätzlich zur Ansteuerung des elektronischen Schalters 13 durch den Strom durch die Z-Dioden 14 und die Steuereinrichtung 19 kann auch eine Ansteuerung des elektronischen Schalters 13 über eine Steuereinrichtung 20 erfolgen, mit der eine direkte Auswertung der an der erfindungsgemäßen Schaltungsanordnung 10 anliegenden und zu begrenzenden Spannung U des Gleichspannungsnetzes 1 erfolgt.

Im Augenblick der Stromübernahme durch den Thyristor 13 und dessen Überbrückung der Z-Dioden 14 wird die resultierende Ansprech-Überspannung der Überspannungsbegrenzungseinrichtung 10 um die Spannung der Z-Dioden 14 kleiner und es erfolgt ein Sprung vom Arbeitspunkt B der Kennlinie K1 zu einem Arbeitspunkt C auf der Kennlinie K2. Der Arbeitspunkt C liegt bereits im Bereich der Spannungsbegrenzung der Varistoren 11.

Durch den stark nichtlinearen, spannungsabhängigen Widerstandsverlauf der Varistoren 11 steigt der Ableitstrom durch die Varistoren 11 und den Thyristor 13 sehr schnell auf einen großen Stromwert I_{D} (z.B. I_{D} = 1000 A) im Arbeitspunkt D an und der energiereiche Überspannungsimpuls wird abgebaut. Die Anzahl der Varistoren 11 ist dabei an ein gewünschtes Energie-Ableitevermögen angepasst.

Da der Thyristor 13 die Z-Dioden 14 überbrückt, kann nach einem Zünden des Thyristors 13 kein Zündstrom mehr über die Leitungsverbindung 16 fließen. Nach dem Abbau des Überspannungsimpulses und einem Abklingen des Ableitstroms durch die Varistoren 11 unter den Haltestrom des Thyristors 13 kehrt dieser selbsttätig wieder in seinen Blockierzustand zurück. Der Arbeitspunkt bewegt sich dabei auf der Kennlinie K2 in Richtung abnehmender Spannungen und Ableitströme bis zu dem Arbeitspunkt E, an dem der Thyristor wieder sperrt und die dem Thyristor 13 parallel geschalteten Z-Dioden 14 den Strom von dem Thyristor 13 übernehmen. Hierdurch kommt es zu einem Sprung vom Punkt E zum Punkt F auf der Kennlinie K1 und es stellt sich wieder die durch die Reihenschaltung der Varistoren 11 und der Z-Dioden 14 definierte Ansprech-Überspannung ein. Die Z-Dioden 14 begrenzen dabei die wiederkehrende Blockierspannung des Thyristors auf den Wert der Z-Diodenspannung. Bei einer Rückkehr der an der Überspannungsbegrenzungseinrichtung 10 anliegenden Spannung U zu der Nennspannung U_{N} des Gleichspannungsnetzes 1 bewegt sich der Arbeitspunkt dann vom Punkt F wieder zurück zum Punkt A. Nach dem Abbau des Überspannungsimpulses hat sich somit der Ausgangszustand der Überspannungsbegrenzungseinrichtung 10 selbsttätig wieder eingestellt.

Zur selbsttätigen Löschung des Thyristors 13 ist es erforderlich, dass der Übergang vom Punkt E der Kennlinie K2 zum Punkt F der Kennlinie K1 bei einem Strom erfolgt, der kleiner oder gleich dem Haltestrom des Thyristors 13 ist. Für den Fall, dass dieses auf Grund der erforderlichen Bauelementeauswahl und Bauelementedaten der in Schaltung 10 verwendeten elektronischen Bauelemente, insbesondere des Thyristors 13, nicht gegeben ist oder nicht realisiert werden kann, ist eine Löschung oder Löschunterstützung für den Thyristor 13 erforderlich, wie sie in einer beispielhaften technischen Schaltungslösung in FIG 3 angegeben ist.

Die in FIG 3 beispielhaft dargestellte Schaltung stellt eine Erweiterung der erfindungsgemäßen Schaltung 10 um eine Löscheinrichtung 30 dar. Die Löscheinrichtung 30 wird dabei nur im Prinzip und als Beispiel für eine Vielzahl möglicher technischer Lösungen zur Löschung eines Thyristorstroms beschrieben.

Ein Widerstand 31 dient dabei als Ladewiderstand für einen Löschkondensator 32. Zum Löschen des Thyristors 13 wird ein Schalter 33 geschlossen, so dass die im Löschkondensator 32 gespeicherte Energie einen Stromfluss I_{LOE} durch den Thyristor 13 hervorruft, dessen Stromrichtung entgegengesetzt zu dem Strom I_{VAR} ist, der zum beabsichtigten Löschzeitpunkt durch die Varistoren 11 und den Thyristor 13 fließt. Der Betrag des Löschstroms I_{LOE} muss dabei vorzugsweise größer oder etwa gleich des Betrags des Stroms I_{VAR} zum Löschzeitpunkt sein. Der Betrag und die Dauer des erforderlichen Löschstroms I_{LOE} kann dabei durch geeignete Dimensionierung des Löschkondensators 32 und eines strombegrenzenden Widerstands 34 erreicht werden.

Der Schalter 33 kann vorzugsweise als elektronischer Halbleiterschalter ausgeführt werden. Die Ansteuerung des Schalters 33 über eine Steuerleitung 35 kann durch eine Auswertung des Stroms I_{VAR} durch den Thyristor 13 in der Art erfolgen, dass der Schalter 33 geschlossen und damit der Thyristor 13 gelöscht wird, wenn der Strom I_{VAR} durch Thyristor 13 einen definierten Minimalwert unterschreitet. Alternativ oder zusätzlich dazu kann auch eine Ansteuerung des Schalters 33 mittels einer Steuerleitung 37 über eine direkte Auswertung der an der erfindungsgemäßen Schaltungsanordung 10 anliegenden und zu begrenzenden Spannung des Gleichspannungsnetzes 1 mittels der Steuereinrichtung 20 oder über eine Auswertung des Spannungsabfalls über dem Thyristor 13 mittels einer Steuereinrichtung 36 und entsprechende Ansteuerung des Schalters 33 über eine Steuerleitung 40 erfolgen, indem bei Unterschreitung einer definierten Höhe dieser Spannung(en) ein Löschen des Thyristors 13 durch Schließen des Schalters 33 erfolgt. Statt eines Thyristors 13 kann auch ein anderer elektronischer Schalter wie z.B. ein IGBT verwendet werden. Insbesondere kann es sich auch um einen ein- und ausschaltbaren Schalter handeln, dessen Schaltzustand durch eine Steuereinrichtung gesteuert wird, die den durch die Z-Dioden 14 und den durch den elektronischen Schalter 13 fließenden Strom erfasst und den Schalter 13 auf Stromdurchfluss schaltet, wenn der durch die Z-Dioden 14 fließende Strom einen vorgegebenen Grenzwert überschreitet bzw. auf Stromsperre schaltet, wenn der Schalterstrom einen vorgegebenen Grenzwert unterschreitet.

Durch die Anzahl der in Reihe geschalteten Z-Dioden 14 lässt sich eine gewünschte Summenspannung der Z-Dioden 14 und somit auch der Unterschied zwischen der Ansprechspannung bei kleinem Strom (aus der Reihenschaltung von Z-Dioden 14 und Varistoren 11) und der Begrenzungsspannung bei hohem Strom (durch die Varistoren 11 alleine) wählen. Durch geeignete Auslegung und Dimensionierung der Schaltungselemente lässt sich die Spannungsbegrenzungsfunktion der Überspannungsbegrenzungseinrichtung 10 in einem weiten Energie-, Spannungs- und Strombereich an eine gewünschte Ansprech-Überspannung, einen gewünschten abzuleitenden Strom im Spannungsbegrenzungsfall und an eine gewünschte Begrenzungsspannung bei hohem Ableitstrom anpassen, wobei eine Spannungsbegrenzung auch bei vergleichsweise geringen Differenzen zwischen zulässiger maximaler Spannung und normaler Betriebsspannung des Netzes möglich ist.

## Patentansprüche

1. Überspannungsbegrenzungseinrichtung (10) für Gleichspannungsnetze (1), mit einem Varistor (11), **wobei** der Varistor (11) in Reihe zu einer Parallelschaltung (12) aus einem, vorzugsweise elektronischen, Schalter (13) und einem elektronischen Bauteil (14) mit einer spannungsbegrenzenden Charakteristik, vorzugsweise einer Z-Dioden-Charakteristik, oder mehreren in Reihe geschalteten elektronischen Bauteilen (14) mit jeweils einer spannungsbegrenzenden Charakteristik, vorzugsweise einer Z-Dioden-Charakteristik, geschaltet ist, **gekennzeichnet durch eine Steuereinrichtung (19), die derart eingerichtet ist, dass sie den Schalter (13) schließt, wenn der Strom durch das (die) elektronische(n) Bauteil(e) (14) mit der spannungsbegrenzenden Charakteristik einen vorgegebenen Wert überschreitet.**

2. Überspannungsbegrenzungseinrichtung (10) nach Anspruch 1, **gekennzeichnet durch** eine Steuereinrichtung (20), die derart eingerichtet ist, dass sie den Schalter (13) schließt, wenn die zu begrenzende Spannung einen vorgegebenen Wert überschreitet.

3. Überspannungsbegrenzungseinrichtung (10) nach einem der vorhergehenden Ansprüche, **dadurch gekennzeichnet, dass** der Schalter (13) derart ausgebildet ist, dass er selbsttätig öffnet, oder dass die Steuereinrichtung (19, 20) oder eine Löscheinrichtung (30) für den Schalterstrom derart eingerichtet ist, dass sie den Schalter (13) öffnet, wenn die zu begrenzende Spannung einen vorgegebenen Wert unterschreitet.

4. Überspannungsbegrenzungseinrichtung (10) nach einem der vorhergehenden Ansprüche, **dadurch gekennzeichnet, dass** der Schalter (13) derart ausgebildet ist, dass er selbsttätig öffnet, oder dass die Steuereinrichtung (19, 20) oder eine Löscheinrichtung (30) für den Schalterstrom derart eingerichtet ist, dass sie den Schalter (13) öffnet, wenn der Strom durch den Schalter (13) einen vorgegebenen Wert unterschreitet.

5. Überspannungsbegrenzungseinrichtung (10) nach einem der vorhergehenden Ansprüche, **dadurch gekennzeichnet, dass** durch die Reihenschaltung des Varistors (11) mit dem (den) elektronischen Bauteil(en) (14) mit der spannungsbegrenzenden Charakteristik eine Ansprech-Überspannung für eine Überspannungsbegrenzung definiert ist, die kleiner oder gleich einer maximal erlaubten Überspannung (Umax) des Gleichspannungsnetzes (1) ist.

6. Überspannungsbegrenzungseinrichtung (10) nach einem der vorhergehenden Ansprüche, **dadurch gekennzeichnet, dass** der Varistor (11) eine Dauernennbetriebsspannung (UNV) aufweist, die kleiner als die Nennspannung (UN) des Gleichspannungsnetzes (1) ist.

7. Überspannungsbegrenzungseinrichtung (10) nach einem der vorhergehenden Ansprüche, **dadurch gekennzeichnet, dass** der Varistor (11) eine Begrenzungsspannung (UB) aufweist, die bei einem zu erwartendem Ableitstrom kleiner oder gleich einer maximal erlaubten Überspannung (Umax) des Gleichspannungsnetzes (1) ist.

8. Überspannungsbegrenzungseinrichtung (10) nach einem der vorhergehenden Ansprüche, **dadurch gekennzeichnet, dass** die Anzahl der in Reihe geschalteten elektronischen Bauteile (14) mit der spannungsbegrenzenden Charakteristik derart gewählt ist, dass die Summe aus den Dauernennbetriebsspannungen der elektronischen Bauteile (14) mit der spannungsbegrenzenden Charakteristik und der Dauernennbetriebsspannung (UNV) des Varistors (11) gleich groß wie die Nennspannung (UN) des Gleichspannungsnetzes (1) ist.

9. Überspannungsbegrenzungseinrichtung (10) nach einem der vorhergehenden Ansprüche, **gekennzeichnet durch** einen in Reihe zu dem (den) elektronischen Bauteil(en) (14) mit der spannungsbegrenzenden Charakteristik geschalteten elektrischen Widerstand (15), der derart dimensioniert ist, dass bei Erreichen einer Ansprech-Überspannung der Überspannungsbegrenzungseinrichtung (10) ein so großer Strom **durch** den Widerstand (15) fließt, dass an dem Widerstand (15) eine Spannung abfällt, die ausreicht, um den Schalter (13) in den durchgeschalteten Zustand zu versetzen, insbesondere einen Thyristor zu zünden.

10. Überspannungsbegrenzungseinrichtung (10) nach einem der vorhergehenden Ansprüche, **dadurch gekennzeichnet, dass** der Schalter (13) als ein Thyristor ausgebildet ist.

11. Überspannungsbegrenzungseinrichtung (10) nach Anspruch **10, gekennzeichnet durch** eine Löscheinrichtung (30) zur Löschung eines Stromes **durch** den Thyristor.

12. Überspannungsbegrenzungseinrichtung (10) nach einem der vorhergehenden Ansprüche, **dadurch gekennzeichnet dass** das (die) elektronische(n) Bauteil(e) (14) mit der spannungsbegrenzenden Charakteristik jeweils als eine Z-Diode oder ein Varistor ausgebildet ist (sind).

13. Überspannungsbegrenzungseinrichtung (10) nach einem der vorhergehenden Ansprüche, **dadurch gekennzeichnet, dass** sie statt des einen Varistors (11) mehrere zueinander parallel geschaltete Varistoren (11) aufweist.

14. Überspannungsbegrenzungseinrichtung (10) nach Anspruch **13, dadurch gekennzeichnet, dass** die Anzahl der Varistoren (11) an ein gewünschtes Energie-Ableitevermögen angepasst ist.

## Claims

1. Surge-limiting device (10) for direct current networks (1), said device comprising a varistor (11), wherein the varistor (11) is connected in series with a parallel circuit (12) consisting of a preferably electronic switch (13) and an electronic component (14) having a voltage-limiting characteristic, preferably a Z diode characteristic, or a plurality of series-connected electronic components (14), each having a voltage-limiting characteristic, preferably a Z diode characteristic, **characterised by** a control device (19) which is configured in such a way that it closes the switch (13) if the current through the electronic component(s) (14) having the voltage-limiting characteristic exceeds a predetermined value.

2. Surge-limiting device (10) according to claim 1, **characterised by** a control device (20) which is configured in such a way that it closes the switch (13) if the voltage that is to be limited exceeds a predetermined value.

3. Surge-limiting device (10) according to one of the preceding claims, **characterised in that** the switch (13) is embodied in such a way that it opens automatically, or **in that** the control device (19, 20) or a quenching device (30) for the switch current is configured in such a way that it opens the switch (13) if the voltage that is to be limited falls below a predetermined value.

4. Surge-limiting device (10) according to one of the preceding claims, **characterised in that** the switch (13) is embodied in such a way that it opens automatically, or **in that** the control device (19, 20) or a quenching device (30) for the switch current is configured in such a way that it opens the switch (13) if the current through the switch (13) falls below a predetermined value.

5. Surge-limiting device (10) according to one of the preceding claims, **characterised in that** a tripping overvoltage for surge limiting which is less than or equal to a maximum permitted overvoltage (Umax) of the direct current network (1) is defined by means of the series connection of the varistor (11) with the electronic component(s) (14) having the voltage-limiting characteristic.

6. Surge-limiting device (10) according to one of the preceding claims, **characterised in that** the varistor (11) has a rated steady-state operating voltage (UNV) which is less than the rated voltage (UN) of the direct current network (1).

7. Surge-limiting device (10) according to one of the preceding claims, **characterised in that** the varistor (11) has a limiting voltage (UB) which is less than or equal to a maximum permitted overvoltage (Umax) of the direct current network (1) at an anticipated leakage current.

8. Surge-limiting device (10) according to one of the preceding claims, **characterised in that** the number of series-connected electronic components (14) having the voltage-limiting characteristic is chosen such that the sum of the rated steady-state operating voltages of the electronic components (14) having the voltage-limiting characteristic and the rated steady-state operating voltage (UNV) of the varistor (11) is equal in size to the rated voltage (UN) of the direct current network (1).

9. Surge-limiting device (10) according to one of the preceding claims, **characterised by** an electrical resistor (15) which is connected in series with the electronic component(s) (14) having the voltage-limiting characteristic and which is dimensioned such that, upon a tripping overvoltage of the surge-limiting device (10) being reached, a current flowing through the resistor (15) is so large that there occurs at the resistor (15) a voltage drop which is sufficient to switch the switch (13) into the through-connected state, in particular to fire a thyristor.

10. Surge-limiting device (10) according to one of the preceding claims, **characterised in that** the switch (13) is embodied as a thyristor.

11. Surge-limiting device (10) according to claim 10, **characterised by** a quenching device (30) for quenching a current through the thyristor.

12. Surge-limiting device (10) according to one of the preceding claims, **characterised in that** the electronic component(s) (14) having the voltage-limiting characteristic is (are) in each case embodied as a Z diode or a varistor.

13. Surge-limiting device (10) according to one of the preceding claims, **characterised in that** instead of just the one varistor (11) it has a plurality of varistors (11) connected in parallel with one another.

14. Surge-limiting device (10) according to claim 13, **characterised in that** the number of varistors (11) is matched to a desired energy discharge capacity.

## Revendications

1. Dispositif (10) de limitation de la surtension pour des réseaux (1) à courant continu, comprenant une varistance (11), la varistance (11) étant montée en série avec un circuit (12) en parallèle composé d'un interrupteur (13), de préférence électronique, et d'un composant (14) électronique ayant une caractéristique limitant la tension, de préférence une caractéristique de diode Z, ou avec plusieurs composants (14) électroniquement montés en série ayant respectivement une caractéristique limitant la tension, de préférence une caractéristique de diode Z,
**caractérisé par** un dispositif (19) de commande qui est conçu de manière à fermer l'interrupteur (13) si le courant passant dans le ou les composants (14) électroniques ayant la caractéristique limitant la tension dépasse une valeur donnée à l'avance.

2. Dispositif (10) de limitation de la surtension suivant la revendication 1, **caractérisé par** un dispositif (20) de commande conçu de manière à fermer l'interrupteur (13) si la tension à limiter dépasse une valeur donnée à l'avance.

3. Dispositif (10) de limitation de la surtension suivant l'une des revendications précédentes, **caractérisé en ce que** l'interrupteur (13) est constitué de manière à s'ouvrir automatiquement ou **en ce que** le dispositif (19, 20) de commande ou un dispositif (30) de suppression du courant de l'interrupteur est conçu de manière à ouvrir l'interrupteur (13) si la tension à limiter devient inférieure à une valeur donnée à l'avance.

4. Dispositif (10) de limitation de la surtension suivant l'une des revendications précédentes, **caractérisé en ce que** l'interrupteur (13) est conçu de manière à s'ouvrir automatiquement ou le dispositif (19, 20) de commande ou un dispositif (30) de suppression du courant de l'interrupteur est conçu de manière à ouvrir l'interrupteur (13) si le courant dans l'interrupteur (13) devient inférieur à une valeur donnée à l'avance.

5. Dispositif (10) de limitation de la surtension suivant l'une des revendications précédentes, **caractérisé en ce qu'**il est défini, par le circuit série de la varistance (11) avec le (les) composants (14) électroniques ayant la caractéristique limitant la tension, une surtension de réponse pour une limitation de la surtension, qui est inférieure ou égale à une surtension (Umax) permise au maximum du réseau (1) à tension continue.

6. Dispositif (10) de limitation de la surtension suivant l'une des revendications précédentes, **caractérisé en ce que** la varistance (11) a une tension (UNV) de fonctionnement nominale permanente, qui est plus basse que la tension (UN) nominale du réseau (1) à tension continue.

7. Dispositif (10) de limitation de la surtension suivant l'une des revendications précédentes, **caractérisé en ce que** la varistance (11) a une tension (UB) de limitation qui, pour un courant de fuite escompté, est inférieure ou égale à une surtension (Umax) permise au maximum du réseau (1) à tension continue.

8. Dispositif (10) de limitation de la surtension suivant l'une des revendications précédentes, **caractérisé en ce que** le nombre des composants (14) électroniques montés en série et ayant la caractéristique limitant la tension est choisi de manière à ce que la somme des tensions de fonctionnement nominales permanentes des composants (14) électroniques ayant la caractéristique limitant la tension et de la tension (UNV) de fonctionnement nominale permanente de la varistance (11) soit égale à la tension (UN) nominale du réseau (1) à tension continue.

9. Dispositif (10) de limitation de la surtension suivant l'une des revendications précédentes, **caractérisé par** une résistance (15) électrique, qui est montée en série avec le ou avec les composants (14) électroniques ayant la caractéristique limitant la tension et qui est dimensionnée de manière à ce que, lorsque le dispositif (10) de limitation de la tension atteint une surtension de réponse, il passe dans la résistance (15) un courant si intense qu'il chute aux bornes de la résistance (15) une tension qui suffit pour mettre l'interrupteur (13) dans l'état passant, notamment pour amorcer un thyristor.

10. Dispositif (10) de limitation de la surtension suivant l'une des revendications précédentes, **caractérisé en ce que** l'interrupteur (13) est sous la forme d'un thyristor.

11. Dispositif (10) de limitation de la surtension suivant la revendication 10, **caractérisé par** un dispositif (10) de suppression d'un courant passant dans le thyristor.

12. Dispositif (10) de limitation de la surtension suivant l'une des revendications précédentes, **caractérisé en ce que** le (les) composants (14) électroniques ayant la caractéristique limitant la tension et/ou sont sous la forme d'une diode Z ou d'une varistance.

13. Dispositif (10) de limitation de la surtension suivant l'une des revendications précédentes, **caractérisé en ce qu'**il a, au lieu d'une varistance (11), plusieurs varistances (11) montées en parallèle entre elles.

14. Dispositif (10) de limitation de la surtension suivant la revendication 13, **caractérisé en ce que** le nombre des varistances (11) est adapté à un pouvoir souhaité de dissipation de l'énergie.
